Europäisches Patentamt

European Patent Office

Office européen des brevets

(11) Publication number: **0 094 736**
**B1**

(12) **EUROPEAN PATENT SPECIFICATION**

(45) Date of publication of patent specification: **30.07.86**

(21) Application number: **83301559.7**

(22) Date of filing: **17.03.83**

(51) Int. Cl.⁴: **F 16 D 55/02**

(54) Disc brakes.

(30) Priority: **15.04.82 GB 8211032**

(43) Date of publication of application:
**23.11.83 Bulletin 83/47**

(45) Publication of the grant of the patent:
**30.07.86 Bulletin 86/31**

(84) Designated Contracting States:
**DE FR IT**

(56) References cited:
**DE-A-1 525 390**
**DE-A-2 020 684**
**DE-A-2 049 035**
**GB-A-1 061 142**
**GB-A-1 212 427**
**GB-A-1 244 955**

(73) Proprietor: **AUTOMOTIVE PRODUCTS PUBLIC LIMITED COMPANY**
**Tachbrook Road**
**Leamington Spa Warwickshire CV31 3ER (GB)**

(72) Inventor: **Haines, William Ernest**
**39 St. Mary's Close**
**Southam Warwickshire (GB)**

(74) Representative: **Farrow, Robert Michael**
**Patent Department Automotive Products plc**
**Tachbrook Road**
**Leamington Spa Warwickshire CV31 3ER (GB)**

Courier Press, Leamington Spa, England.

## Description

The invention relates to disc brakes and in particular but not necessarily exclusively to automobile disc brakes.

A well-known construction of disc brake comprises a fixed support with mountings for attachment to a stationary member on one side of the rotatable disc and with a pair of arms bridging the disc so that the support has parts on both sides of the disc for supporting two brake pads on opposite sides of the disc. The brake incorporates an actuator, normally hydraulic, for applying the pads to the disc. The pads have to slide freely towards and away from the disc and so have some free play radially and circumferentially of the disc. It is common to provide anti-rattle springs to urge the pads against the fixed support to hold them in engagement with surfaces of the support. A disc brake of this kind is known for example from DE—A—2049035 and the corresponding GB—A—1279055.

Withdrawal and re-installation of pads and anti-rattle springs can be a difficult operation, particularly as in many designs including that of DE—A—2049035 it is necessary to dismantle other parts of the brake to provide access to the pads. There can be a risk of incorrect installation or of allowing one component to fall out while another is being installed.

An object of this invention is to provide a disc brake with a particularly convenient form of anti-rattle spring.

According to the invention there is provided a disc brake having a support for attachment to a stationary member on one side of a rotatable disc, said support having two arms bridging the disc, two brake pads supported one on each side of the disc by the support, and an anti-rattle spring acting between the support and each pad to bias the pad against the support, the anti-rattle spring having one end portion that bears against a pad in a generally radially inward direction, characterised in that the spring has an intermediate portion that bears in a generally radially outward direction against the radially inner side of one of the support arms and an other end portion which is U-shaped so that it extends round the edge of the arm remote from the pad and is clipped over the radially outer side of the arm and so locates the spring on the arm. An advantage of this type of anti-rattle spring is that it can be released easily from the arm and withdrawn easily from the brake to facilitate pad removal.

Preferably said one end portion of the anti-rattle spring engages both pads and it may incorporate a cross piece extending out to engage both pads. The spring should preferably be arranged to bear in a radially inward direction on the pad or pads.

A depression may be provided on the radially outer side of the arm and a corresponding projection of the anti-rattle spring can engage in this depression to assist location of the spring.

The brake may include two such anti-rattle springs, one on each arm and each engaging the adjacent end portions of both pads.

The invention will be described by way of example and with reference to the accompanying drawings in which:—

Figure 1 is a plan view, partly in section, of a disc brake incorporating an anti-rattle spring;

Figure 2 is an elevation, partly in section, of the brake shown in Figure 1;

Figure 3 is a perspective view of an anti-rattle spring utilised in Figure 1 and Figure 2; and

Figure 4 is a perspective view of a wear plate as employed in Figure 1 and Figure 2.

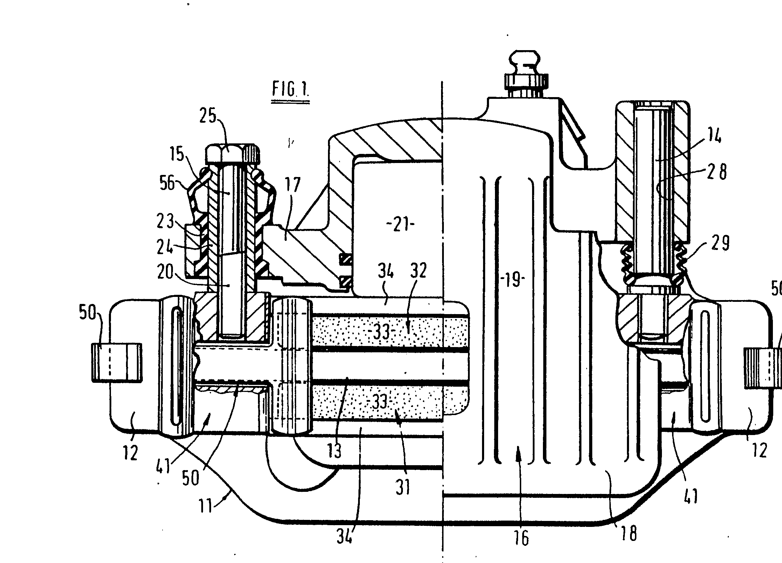

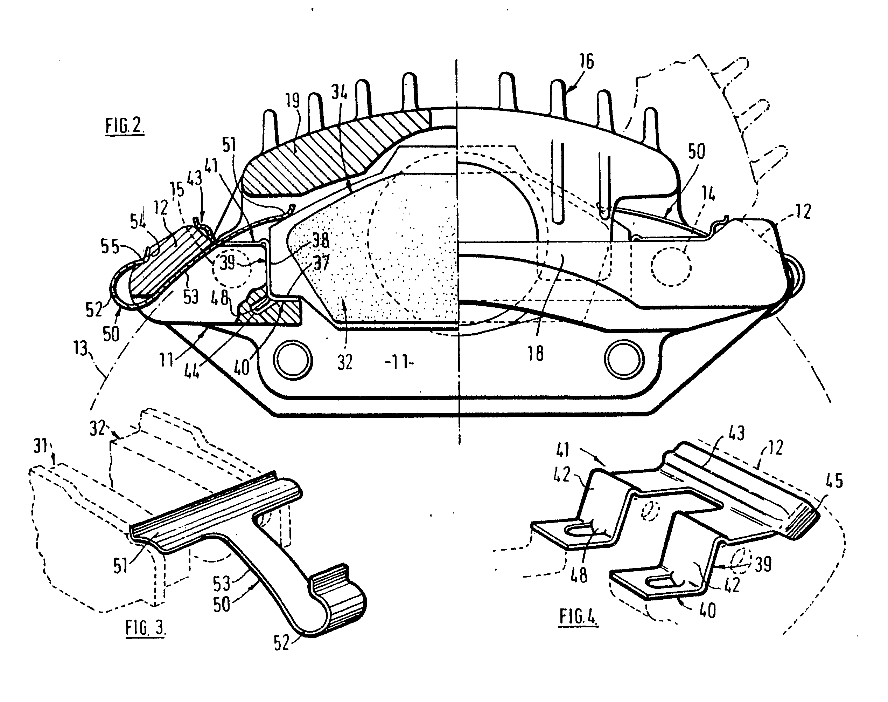

With reference to Figures 1 and 2 the disc brake of an automobile comprises a cast aluminium fixed support 11 which in use is bolted to a stationary support e.g. a front wheel stub axle, at one side of a rotary disc 13 (shown in dotted outline) fixed to a wheel hob. The support has a pair of spaced arms 12 that bridge the outer periphery of the disc and whose ends are joined together to form a closed loop.

A pair of slide pins 14 and 15 are screwed into the support 11 and project axially away from the disc 13 (that is axially with respect to the axis of rotation of the disc). A cast aluminium caliper 16, having the shape of a partially closed fist, straddles the outer periphery of the disc 13, and is axially slidable on the pins 14 and 15. The caliper 16 comprises two limbs 17 and 18, linked by a bridge 19. The one limb 17 on the same side as the support 11 has a hydraulic actuator 21 therein and the other limb 18 lies between the disc 13 and the closed loop of the support.

The pin 14 is of stainless steel, and is screwed into the support 11 and engages in a bore 28 in limb 17 of the caliper 16 so that the caliper slides on the pin. A boot 19 protects the exposed surface of the pin 14. The pin 15 comprises a stainless steel slide bush 24 which is clamped to the support 11 by a stainless steel bolt 20 which passes through the bush 24 and is screwed into the support 11. An ethylenepropylene rubber bush 23 in the limb 17 of the caliper slides on this bush 24. The rubber bush 23 has an integral boot portion 56 which surrounds and protects the outer surface of the bush 24. The hexagon head 25, on the bolt 20, allows the bolt 20 to be unscrewed easily from the support 11, and withdrawn to allow the caliper to be pivoted around the other pin 14 for a purpose to be described.

Two opposed friction pads 31 and 32 are arranged one each side of the disc 13 and are located in the support 11. The pads 31 and 32 each comprise the usual friction material 33 mounted onto a mild steel back plate 34. The pads are arranged between the two limbs 17 and 18 of the caliper so that the hydraulic actuator 21 acts directly against one pad 32, and indirectly against the other pad 31 through the bridge 19 and the other limb 18. On the application of hydraulic pressure in the actuator 21 the actuator thrusts the pad 32 against one side of the disc and the reaction causes the caliper 16 to slide on the pins 14 and 15 and apply the pad 31 to the other side of the disc. The torque load caused by the frictional engagement of the pads 31 and 32 with the disc 13 is reacted on the support 11.

The pads 31 and 32 each have inwardly facing surfaces 37 and circumferentially facing surfaces 38 positioned adjacent each other at each radially inner corner of the pad. The pads are supported by these surfaces 37 and 38 on co-operating flat surfaces 39 and 40 on each of the arms 12 of the support.

The surfaces 39 and 40 of the arms 12 are protected by stainless steel wear plates 41 which prevent the back plates 34 of the pads from rubbing against the softer alumilnum arms 12 and also prevent electro chemical corrosion caused by chemical reaction between the aluminium and mild steel. Each of the wear plates 41 (see Figure 4) comprises a pair of arms 42 linked by a bridge portion 43. The arms 42 lie one on each side of the disc 13 and are each dog-leg shaped to follow the contours of the arms 12 and the flat surfaces 39 and 40 so that each arm provides a bearing surface for the respective pads on that side of the disc. Each arm has a lug 48 thereon at the corner of the leg between the two surfaces 39 and 40. The lugs 48 each project into a hole 44 in an arm to assist location of the respective wear plate. The bridge portion 43 has tabs 45 at each end that also help to locate the wear plate on the respective arm. The wear plates 41 form part of the fixed support 11.

The pads 31 and 32 are each biased against and thus held onto the wear plate 41 on the support by a pair of anti-rattle (otherwise known as 'hold down') springs 50. (see Figure 3). Each anti-rattle spring is 'T' shaped and the stem 53 of the 'T' acts as a leaf spring. One end portion of the spring incorporating the cross piece 51 of the 'T' bears in a generally radially inward direction against the two pads 31 and 32. The other end portion of the spring, namely the outer end portion of the stem 53 is bent back to form a 'U' shaped loop 52 that clips over the radially outer side of the arm 12 and so locates the spring on the arm 12. Each support arm 12 has a depression 54 into which a projection 55 in the loop 52 engages, to hold the clip 50 in the position shown. When fitted in position on the brake caliper the leaf spring 53 passes on the radially inner siides of the arm so that an intermediate portion of the spring bears in a generally radially outward direction against the arm when it reacts on the pads 31 and 32, when clipped in position. The leaf spring 52 passes through the spaced arms of the wear plate 41. The spring acts on the pad in a radially inward direction but may also have a circumferential component of force.

In order to replace worn pads 31 and 32 with new pads, bolt 25 is removed so that the caliper 16 becomes freely pivotal on pin 14. The caliper is then pivoted to the position shown in dotted outline, giving ready access to the pads. Withdrawal of the anti-rattle springs 50, which is effected simply by pulling on the ends of the springs in a direction away from the caliper, then enables the old pads to be lifted out and replaced by new ones. The anti-rattle spring adjacent pin 14 should preferably be withdrawn before the caliper is pivotted to the dotted position because otherwise the caliper could interfere with access to the spring. The anti-rattle spring nearest to pin 15 may be withdrawn either before or after pivotting the caliper away from the support.

When fitting new pads, the piston of hydraulic actuator 21 should be retracted and the caliper slid along pin 14 to accommodate the increased thickness of the new pads.

Depending on the orientation of the brake, the new pads may tend to fall out from their correct location until constrained by the anti-rattle springs or the repositioned caliper. For this reason it may be particularly desirable to replace the anti-rattle spring adjacent pin 20 before re-positioning the caliper. Depending on the installation, it may also be possible to replace the anti-rattle spring adjacent pin 14 before re-positioning the caliper. Alternatively, if it is desired to remove and refit the anti-rattle springs without removing pin 20 and pivoting the caliper away from the support this withdrawal and refitting can be effected easily. For example, withdrawal of the springs might be desirable to facilitate close inspection of the pads.

These advantages are brought about by the simple mounting of the anti-rattle springs on the support arms 12 which extend across the periphery of the disc.

Anti-rattle springs similar to the springs 50 may be employed in a variety of types of disc brake which have arms corresponding to arms 12 which bridge the outer periphery of the disc, that is not only brakes in which the caliper slides on pins. While it is normally preferable to provide two such anti-rattle springs, one on each arm 12, a single anti-rattle spring on one arm may be sufficient in some cases. Whilst a pair of common anti-rattle springs acting on both pads is preferred, individual anti-rattle springs arranged side by side and acting one on each pad may be employed instead.

## Claims

1. A disc brake having a support (11) for attachment to a stationary member on one side of a rotatable disc (13), said support having two arms (12) bridging the disc, two brake pads (31 and 32) supported one on each side of the disc by the support, and an anti-rattle spring (50) acting between the support and each pad to bias the pad against the support, the anti-rattle spring having one end portion (51) that bears against a pad in a generally radially inward direction, characterised in that the spring has an intermediate portion (53) that bears in a generally radially outward direction against the radially inner side of one of the support arms (12), and an other end portion which is U-shaped so that it extends round the edge of the arm (12) remote from the pad and is clipped over the radially outer side of the arm and so locates the spring on the arm.

2. A disc brake as claimed in claim 1 characterised in that said one end portion (51) of the anti-rattle spring engages both pads (31 and 32).

3. A disc brake as claimed in claim 2 characterised in that said one end portion of the anti-rattle spring incorporates a cross piece (51) extending out to engage both pads.

4. A disc brake as claimed in any preceding claim characterised by provision of a depression (54) on the radially outer side of the arm (12) into which a corresponding projection (55) of the spring engages.

5. A disc brake as claimed in any preceding claim characterised in that two such anti-rattle springs (50), one on each arm (12) and each engaging the adjacent end portions of both pads (31 and 32) are provided.

## Patentansprüche

1. Schiebenbremse mit einem Träger (11) zur Befestigung an einem stationären Teil auf einer Seite einer drehbaren Scheibe (13), wobei der Träger zwei die Scheibe überbrückende Arme (12), zwei Bremsklötze (31 und 32), von denen einer auf jeder Seite der Scheibe durch den Träger abgestützt wird, und eine Antiratterfeder (50) hat, die zwischen dem Träger und jedem Klotz wirkt, um den Klotz gegen den Träger vorzuspannen, wobei die Antiratterfeder einen Endabschnitt (51) hat, der gegen eine Klotz in einer im allgemeinen radialen Einwärtsrichtung drückt, dadurch gekennzeichnet, daß die Feder einen Zwischenabschnitt (53), der in einer im allgemeinen radialen Auswärtsrichtung gegen die radial innere Seite von einem der Trägerarme (12) drückt, und einen anderen Endabschnitt hat, der U-förmig ist, so daß er um den von dem Klotz entfernten Rand des Armes (12) herum verläuft under über die radial aüßere Seite des Armes geklammert ist und die Feder so an dem Arm hält.

2. Scheibenbremse nach Anspruch 1, dadurch gekennzeichnet, daß ein Endabschnitt (51) der Antiratterfeder an beiden Klötzen (31 und 32) angreift.

3. Scheibenbremse nach Anspruch 2, dadurch gekennzeichnet, daß ein Endabschnitt der Antiratterfeder ein Querstück (51) beinhaltet, daß sich nach außen erstreckt, um an beiden Klötzen anzugreifen.

4. Scheibenbremse nach irgendeinem vorhergehenden Anspruch, gekennzeichnet durch eine Vertiefung (54) an der radial äußeren Seite des Armes (12), in welche ein entsprechender Vorsprung (55) der Feder eingreift.

5. Schiebenbremse nach irgendeinem vorhergehenden Anspruch, dadurch gekennzeichnet, daß zwei solcher Antiratterfedern (50), und zwar eine an jedem Arm (12), vorgesehen sind, von denen jede an den benachbarten Endabschnitten von beiden Klötzen (31 und 32) angreift.

## Revendications

1. Frein à disque possédant un support (11) qui est destiné à être monté sur un élément fixe d'un côté d'un disque rotatif (13), et qui possède deux bras (12), qui forment pour sur le disque, deux patins de frein (31 et 32) suportés, de part et d'autre du disque par le support, et un ressort anti-battement ou anti-cliquètement (50) qui agit entre le ressort et chaque patin pour tendre à appliquer le patin contre le support, et qui présente un première partie d'extrémité (51) qui porte sur un patin, dans un sens pratiquement centripète, caractérisé en ce que le ressort possède une partie intermédiaire (53), qui porte dans un sens pratiquement centrifuge sur le côté radial intérieur d'un des bras supports (12) et une autre partie d'extrémité qui est en forme de U, de sorte qu'elle embrasse le bord du bras (12), qui est le plus éloigné du patin, et est serrée sur le côté radial extérieur du bras et fixe ainsi la position du ressort sur le bras.

2. Frein à disque selon la revendication 1, caractérisé en ce que ladite première partie d'extrémité (51) du ressort anti-battement ou anti-cliquètement s'appuie sur les deux patins (31 et 32).

3. Frein à disque selon la revendication 2, caractérisé en ce que ladite première partie d'extrémité du ressort anti-battement ou anti-cliquètement comprend une pièce transversale (51) qui s'étend vers l'extérieur pour s'appuyer sur les deux patins.

4. Frein à disque selon l'une quelconque des revendications précédentes, caractérisé par la présence d'une dépression (54) sur le côté radial extérieur du bras (12) où s'engage une saillie correspondante (55) du ressort.

5. Frein à disque selon l'une quelconque des revendications précédentes, caractérisé en ce qu'il comprend deux tels ressorts anti-battement ou anti-cliquètement (50), un sur chaque bras (12) et dont chacun s'appuie sur les parties d'extrémités voisines des deux patins (31 et 32).

FIG 1.

FIG.2

FIG.3

FIG.4